# EUROPÄISCHE PATENTSCHRIFT

(11) **EP 0 694 982 B1**
(45) Veröffentlichungstag und Bekanntmachung des Hinweises auf die Patenterteilung: **14.10.1998**
(21) Anmeldenummer: 95110388.6
(22) Anmeldetag: 04.07.1995
(51) Int. Cl.: H01M 4/92, B01J 23/89, B01J 37/03

(54) **Platinlegierungskatalysator für Brennstoffzellen und Verfahren zu dessen Herstellung**
Platinum alloy catalyst for fuel cells and method of preparation
Catalyseur de platine allié pour piles à combustible et procédé de préparation

(30) Priorität: 29.07.1994 DE 4426973
(43) Veröffentlichungstag der Anmeldung: 31.01.1996
(73) Patentinhaber: Degussa Aktiengesellschaft, 60311 Frankfurt (DE)
(72) Erfinder: Brand, Reinhold, Dr., D-63452 Hanau (DE); Freund, Andreas, Dr., D-63801 Kleinostheim (DE); Lang, Jutta, Dr., D-63755 Alzenau (DE); Lehmann, Thomas, Dr., D-63505 Langenselbold (DE); Ohmer, Johannes, Dr., D-63584 Gründau-Rothenbergen (DE); Tacke, Thomas, Dr., D-61381 Friedrichsdorf (DE); Heinz, Gerhard, D-63594 Hasselroth-Neuenhasslau (DE); Schwarz, Robert, D-63517 Rodenbach (DE)

(56) Entgegenhaltungen:
- EP-A- 0 165 024
- EP-A- 0 355 853
- WO-A-91/19566
- US-A- 4 136 059
- US-A- 4 677 092

## Beschreibung

Die vorliegende Erfindung betrifft einen Platinlegierungskatalysator und ein Verfahren zu dessen Herstellung für die Verwendung in Brennstoffzellen.

Platin- und insbesondere legierte Platinkatalysatoren auf elektrisch leitfähigen Kohlenstoffträgern werden als Elektrodenkatalysatoren für Anoden und/oder Kathoden in Brennstoffzellen, bevorzugt in phosphorsauren Brennstoffzellen (Phosphoric Acid Fuel Cell, PAFC) und Polymer-Electrolyt-Membranzellen (Polymer Electrolyte Membrane Fuel Cell, PEMFC), eingesetzt. Als typische Brennstoffe kommen auf der Kathodenseite Sauerstoff bzw. Luft und auf der Anodenseite Wasserstoff, Kohlenwasserstoffe, wie z. B. Methan, sauerstoffhaltige Kohlenwasserstoffe, wie z. B. Alkohole, oder deren Reformate zum Einsatz. Die Platinbeladung liegt im Bereich von 7 - 60 Gew.-%, vorzugsweise im Bereich von 10 - 35 Gew.-% bezogen auf den Katalysator. In Abhängigkeit von der Elektrodenseite werden als elektrisch leitfähige Kohlenstoffträger Ruße, graphitierte Ruße, Graphit, Karbide und deren physikalischen Mischungen verwendet.

Es ist bekannt, daß die erzielte elektrische Leistung einer Phosphorsäurebrennstoffzelle im wesentlichen von der Aktivität des Kathodenkatalysators abhängt. Eine höhere Stromdichte bei vorgegebener Spannung sowie ein geringerer Spannungsabfall während der Standzeit des Brennstoffzellenkatalysators sind deshalb besonders erstrebenswert. Dadurch sinken die Kosten pro erzeugter Stromeinheit.

Als geeignete Katalysatorsysteme mit guten Leistungsdaten haben sich ternäre Platin-Legierungskatalysatoren erwiesen, insbesondere Platinkatalysatoren, die als weitere Legierungsbestandteile Cobalt und Chrom enthalten.

In der Patentliteratur werden verschiedene Verfahren zur Herstellung solcher Legierungskatalysatoren beschrieben. Die einzelnen Verfahren unterscheiden sich im wesentlichen durch die verwendeten Vorstufen für die Legierungskomponenten und durch die Art und Weise der Abscheidung der Legierungskomponenten auf dem leitfähigen Kohlenstoffträger. Der Art und Weise der Abscheidung kommt entscheidende Bedeutung zu, da durch diesen Verfahrensschritt die Feinteiligkeit der späteren Legierungspartikel auf dem Träger und damit die für den elektrochemischen Prozeß zur Verfügung stehende katalytisch aktive Metalloberfläche mitbestimmt wird.

Nach Abscheidung auf dem Träger können die Legierungskomponenten naßchemisch oder durch eine Gasphasenreduktion reduziert werden.

Alle bekannten Verfahren beenden die Herstellung des Katalysators mit einer Temperaturbehandlung zwischen 800 und 1000° C in einer inerten oder reduzierenden Atmosphäre. Durch diese Temperaturbehandlung wird die Reduktion der Legierungskomponenten abgeschlossen. Während der Abkühlung auf Raumtemperatur werden die zunächst als ungeordnete Legierung vorliegenden Legierungspartikel in eine weitgehend geordnete Legierung mit je nach Legierungszusammensetzung überwiegend kubisch flächenzentrierter oder überwiegend kubisch primitiver Raumgitterstruktur überführt. Dabei nehmen die Platinatome einerseits und die Atome der beiden anderen Legierungskomponenten andererseits definierte Gitterplätze ein. Die resultierende Raumgitterstruktur kann als Übergitterstruktur aus zwei sich einander durchdringenden Raumgittern beschrieben werden, wobei das eine durch die Platinatome und das zweite durch die beiden anderen Legierungskomponenten gebildet wird.

Die geordneten Legierungen zeichnen sich durch eine höhere Alterungsstabilität unter den stark korrosiven Bedingungen beim Betrieb in einer PA-Brennstoffzelle (Betriebstemperatur 170 bis 200° C; 100 %ige Phosphorsäure als Elektrolyt) aus.

Die US-PS 4,447,506 und 4,677,092 sowie die PCT WO 91/19566 offenbaren die Herstellung von Pt/Co/Cr-Katalysatoren durch einen mehrstufigen Prozeß, wobei entweder von einem kommerziellen Pt/C-Katalysator ausgegangen oder eine Pt/C-Zwischenstufe in situ erzeugt wird. Durch Zugabe von gelösten Cobalt- und Chromverbindungen zu dem suspendierten Pt/C-Katalysator und gezielte Einstellung des pH-Wertes und der Temperatur kann die vollständige und reproduzierbare Abscheidung von Cobalt und Chrom erreicht werden. Für die Herstellung der Legierungskatalysatoren werden Ammoniumchromat, Chrom(III)nitrat und Cobalt(II)nitrat sowie Hexachloroplatinsäure für die in situ Erzeugung der Pt/C-Katalysatoren verwendet. Nach Abscheidung der Legierungskomponenten wird durch die schon erwähnte thermische Behandlung des Katalysators die geordnete Legierung gebildet. Es werden kubische Platinlegierungspartikel auf dem Kohlenstoffträger erhalten. Als Maß für die Ordnung wird in der US-PS 4,677,092 die relative Höhe des Übergitterpeaks P₁₁₀ im Vergleich zum verschobenen Pt(111)-Peak P₁₁₁ herangezogen. Es konnte gezeigt werden, daß Katalysatoren mit einem hohen Ordnungsgrad eine höhere Stabilität und geringeren Verlust an Legierungskomponenten während des Betriebs der Brennstoffzellen im Vergleich zu Katalysatoren mit ungeordneter Struktur aufweisen.

Buchanan et al. (GB-OS 2,242,203 und EP-OS 0 450 849) beschreiben die sequentielle in situ-Herstellung von Platinlegierungskatalysatoren. Besonders vorteilhaft sind Katalysatoren, die eine hohe elektrochemische Metalloberfläche (ECA) bzw. eine Platinbeladung von größer 20 Gew.-% des Trägerkatalysators aufweisen. Das Verfahren geht von Hexachloroplatinsäure aus, die zu einer basischen Trägersuspension gegeben wird. Die Legierungskomponenten Cobalt und Chrom werden als Chloride oder Nitrate der Suspension des nicht reduzierten Pt/C-Katalysators hinzugefügt. Die Legierungsbildung wird wie üblich durch thermische Behandlung unter Inertgasatmosphäre vollzogen. Eine vorgeschaltete naßchemische Reduktion oder Gasphasenreduktion ist optional.

Die EP 0 355 853 A2 offenbart ternäre Pt-Fe-Cu/C-Legierungskatalysatoren, welche eine tetragonale Kristallstruktur aufweisen. Die tetragonale Kristallstruktur verleiht den Pt-Fe-Cu/C-Katalysatoren eine höhere spezifische Aktivität und eine höhere Stabilität als eine kubische Kristallstruktur. Die EP 0 355 853 A2 offenbart auch einen Pt-Cr-Co/C-Legierungskatalysator mit kubischer Kristallstruktur. Bei der Herstellung des tetragonalen Pt-Fe-Cu/C-Katalysators wird von einem vorgefertigten Pt-Cu/C- oder Pt-Fe/C-Katalysators ausgegangen. Der vorgefertigte Katalysator wird einer weiteren Legierungsbehandlung unterzogen.

Die beschriebenen Verfahren zur Herstellung von Platin- und Platinlegierungskatalysatoren weisen verschiedene Nachteile auf. Die Abscheidung der Legierungskomponenten auf dem Träger wird in mehreren Stufen durchgeführt. Dieser Prozeß ist zeitaufwendig und macht teilweise große Reaktionsvolumina erforderlich. Die Katalysatoren weisen während einzelner Fertigungsstufen relativ hohe Chlorgehalte auf, die sich negativ auf die Aktivität der fertigen Katalysatoren auswirken können. Die Hydrolyse der überwiegend eingesetzten Hexachloroplatinsäure macht ein aufwendiges Kochen der Reduktionslösungen unter Rückfluß notwendig.

Aufgabe der vorliegenden Erfindung ist es, durch ein verbessertes Abscheideverfahren für die Legierungskomponenten Platinlegierungskatalysatoren herzustellen, die aktiver und stabiler als herkömmliche Katalysatoren sind. Das verbesserte Herstellverfahren soll sich durch einen geringeren Zeitbdarf und damit durch verringerte Herstellkosten gegenüber den bekannten Verfahren auszeichnen.

Die Aufgabe wird durch einen Platinlegierungskatalysator gelöst, der auf einem leitfähigen Kohlenstoffträger eine ternäre Legierung aus den Legierungskomponenten Platin, Cobalt und Chrom enthält, wobei die Legierung in hochdispergierter Form mit röntgenographischen Kristallitgrößen von nicht mehr als 60 Å (6 nm) auf dem Träger vorliegt.

Der Katalysator ist dadurch gekennzeichnet, daß die Legierung eine überwiegend tetragonale Struktur aufweist.

Der erfindungsgemäße Katalysator gemäß Anspruch 1 wird in einem einstufigen Prozeß durch gemeinsame Ausfällung der drei Legierungskomponenten erhalten, wie definiert in Anspruch 6. Als lösliche Vorstufen der Legierungskomponenten werden Nitratsalze eingesetzt.

Insbesondere wird für die Hauptkomponente Platin des Legierungskatalysators als Vorstufe Platin(IV)nitrat eingesetzt.

Platin(IV)nitrat ist kommerziell erhältlich und wird gewöhnlich aus Hexachloroplatinsäure hergestellt. Es enthält somit fertigungsbedingt noch geringe Chlorgehalte. Abgesehen von diesen geringen Chloranteilen gewährleistet die erfindungsgemäße Verwendung von Nitratsalzen für alle drei Legierungskomponenten eine weitgehende Chlorfreiheit des Katalysators während aller Fertigungsschritte.

Platin(IV)nitrat zeichnet sich gegenüber anderen Platinverbindungen, insbesondere gegenüber Hexachloroplatinsäure, dadurch aus, daß es sich sehr leicht hydrolysieren läßt. Durch diese Eigenschaft des Platin(IV)nitrats wird die erfindungsgemäß anzuwendende gemeinsame Ausfällung aller drei Legierungskomponenten auf den Kohlenstoffträger erst möglich. Die gemeinsame Ausfällung führt zu fein dispergierten Legierungspartikeln mit sehr homogener Verteilung aller drei Komponenten.

Die homogene Elementverteilung ermöglicht es, durch die nachgeschaltete Temperaturbehandlung bzw. Calcination Legierungspartikel mit weitgehend geordneter Raumstruktur zu erhalten. Die geordnete Legierungsstruktur bildet sich während der Abkühlung des Katalysators in dem Temperaturintervall zwischen 700 und 500° C aus. Die Abkühlzeit bis auf 500° C sollte 30 Minuten nicht unterschreiten, um dem auf Diffusionsvorgängen beruhenden Ordnungsvorgang ausreichend Zeit zu lassen.

Zur Temperaturbehandlung wird der Katalysator unter Inertgasatmosphäre, gewöhnlich Stickstoff, auf Temperaturen oberhalb 800° C, bevorzugt auf 900° C, erwärmt und erst nach Ablauf einer Haltezeit abgekühlt. Die Haltezeit sollte wenigstens 30 Minuten betragen, um eine vollständige Reduktion der Legierungskomponenten und Ausbildung der Legierung zu ermöglichen, und die Dauer von 2 Stunden nicht überschreiten, da mit zunehmender Dauer der Temperaturbehandlung die zunächst feinteiligen Legierungspartikel zu gröberen Partikeln versintern. Bevorzugt sollte daher die Haltezeit 1 Stunde betragen. Dadurch werden Legierungspartikel mit Korndurchmessern unter 60 Å (6 nm) erhalten.

Bevorzugt wird für die erfindungsgemäßen Katalysatoren ein Atomverhältnis zwischen Platin und den beiden anderen Legierungskomponenten Cobalt und Chrom zwischen 80 : 20 und 40 : 60, insbesondere zwischen 60 : 40 und 40 : 60 gewählt.

Das Atomverhältnis zwischen Cobalt und Chrom kann in weiten Grenzen zwischen 95 : 5 und 5 : 95 variiert werden. Vorteilhaft wird jedoch ein Atomverhältnis in den Grenzen zwischen 60 : 40 und 40 : 60, insbesondere ein Atomverhältnis von 1 : 1 eingesetzt.

Für eine optimale Funktion sollte die Beladung des Katalysators zwischen 5 und 35 Gew.-% Platin, bevorzugt zwischen 10 und 20 Gew.-% Platin relativ zum Gesamtgewicht des Katalysators betragen.

Die Legierung liegt auf dem leitfähigen Kohlenstoffträger in hoch dispergierter Form mit Kristallgrößen von nicht mehr als 60 Å (6 nm)vor. Die Kristallite weisen in Abhängigkeit von der Legierungszusammensetzung eine überwiegend tetragonale Raumgitterstruktur mit den Gitterkonstanten a₀ und b₀ von etwa 2,7 Å und c₀ von etwa 3,74 Å. Die tetragonale Raumgitterstruktur entspricht einer intermetallischen Verbindung der Zusammensetzung Pt(Co, Cr).

Als Träger für die Legierungskatalysatoren eignet sich Graphit, leitfähiger Ruß, insbesondere graphitierter Ruß, oder deren physikalische Mischungen.

Die Herstellung der erfindungsgemäßen Katalysatoren wird im einzelnen wie folgt durchgeführt:

Etwa 50 g graphitierter Ruß werden in einer Menge von 1,5 l vollentsalztem Wasser (VE-Wasser) sorgfältig suspendiert. Nach Erwärmen der Suspension auf 80° C stellt sich ein pH-Wert der Suspension zwischen 6,5 und 8 ein. Dieser Suspension wird die zuvor aus Platinnitrat, Cobaltnitrat und Chromnitrat in VE-Wasser hergestellte Imprägnierlösung in einer Portion zugefügt. Menge und Konzentration der Imprägnierlösung werden entsprechend der gewünschten Beladung des fertigen Katalysators mit katalytisch aktiven Metallen bzw. Legierungskomponenten gewählt. Durch Zugabe der sauren Imprägnierlösung zur Ruß-Suspension sinkt deren pH-Wert ab.

Zur vollständigen und gleichzeitigen Abscheidung aller Legierungskomponenten wird der pH-Wert der so erhaltenen Suspension durch Zugabe einer Lauge, wie zum Beispiel einer wäßrigen Lösungen von Natriumcarbonat oder Natriumhydrogencarbonat oder Natronlauge, bevorzugt Natronlauge, auf einen Wert von etwa 9 angehoben.

An diese Prozedur schließt sich eine naßchemische Reduktion der Legierungskomponenten durch Zugabe eines Reduktionsmittels wie Hydrazin, Natriumformiat, Natriumboranat oder Formaldehyd, bevorzugt Formaldehyd, an.

Die so erhaltene Katalysator-Vorstufe wird abfiltriert, gründlich mit VE-Wasser gewaschen und bei etwa 80° C in einem Vakuumtrockenschrank bis auf eine Restfeuchte von unter 2 Gew.-% getrocknet.

Alternativ zur naßchemischen Reduktion nach Abfiltrierung und Trocknung des Katalysators kann eine Gasphasenreduktion angewendet werden.

Die getrocknete Katalysator-Vorstufe wird anschließend unter Inertgasatmosphäre bevorzugt auf 900° C aufgeheizt und nach einer Haltezeit von einer Stunde innerhalb eines Zeitraumes von 30 bis 90 Minuten auf 500° C abgekühlt. Durch diese Temperaturbehandlung bildet sich aus der zunächst noch ungeordneten Legierung eine geordnete Legierung heraus. Nach weiterer Abkühlung auf Raumtemperatur ist der Katalysator gebrauchsfertig.

In den folgenden Beispielen und Vergleichsbeispielen wurden erfindungsgemäße Katalysatoren und Vergleichskatalysatoren aus dem Stand der Technik hergestellt und bezüglich ihrer elektrochemischen Eigenschaften miteinander verglichen. Für alle Katalysatoren wurde als Träger ein graphitierter Ruß Vulcan XC-72 mit einer spezifischen Oberfläche von 85 m²/g verwendet. Die spezifische Oberfläche wurde durch Stickstoffadsorption nach der Methode von Brunauer, Emmett und Teller (BET-Oberfläche) gemäß der Vorschrift in der Norm DIN 66 132 bestimmt.

Als Legierungskomponenten wurden neben Platin die Unedelmetalle Cobalt und Chrom gewählt. Bei der Abscheidung dieser Legierungskomponenten auf dem graphitierten Ruß wurde im Falle der Vergleichskatalysatoren den Vorgaben aus den Beispielen der schon zitierten Patentschriften gefolgt.

Alle Katalysatoren wurden nach der Abscheidung der Legierungskomponenten und einer eventuellen Reduktion einer gleichartigen Temperaturbehandlung unterworfen, um die Auswirkungen des Abscheideverfahrens auf die Eigenschaften der fertigen Katalysatoren beurteilen zu können. Diese Temperaturbehandlung bestand in einer Erwärmung des jeweiligen Katalysators unter Stickstoffatmosphäre auf 900° C, einer Haltezeit von einer Stunde und einer Abkühlung auf Raumtemperatur innerhalb von 1,5 Stunden.

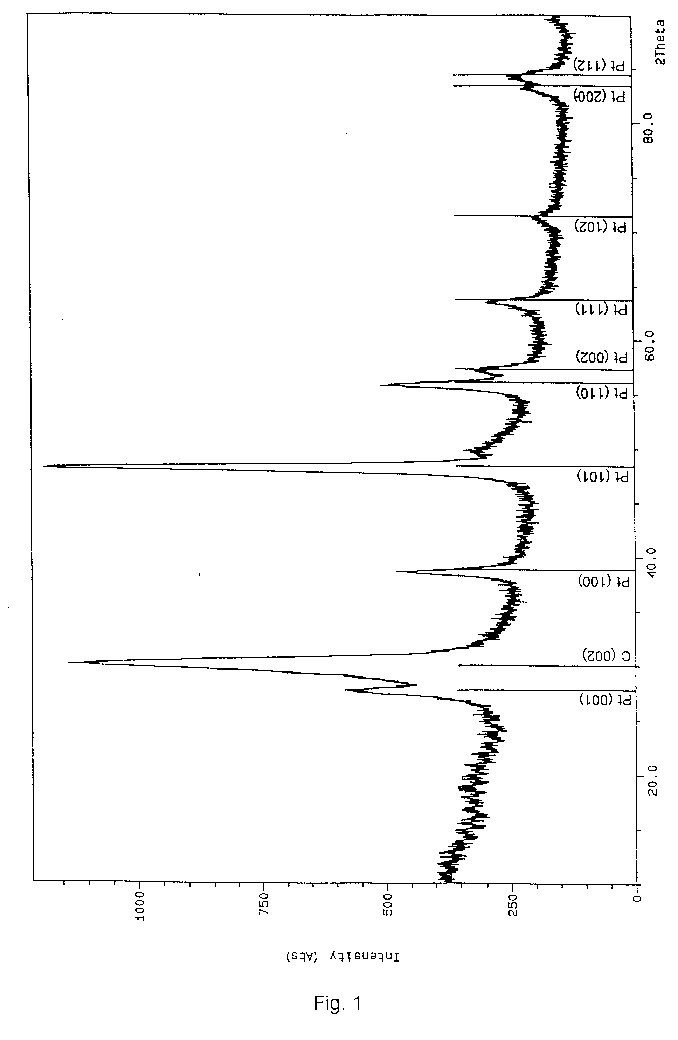

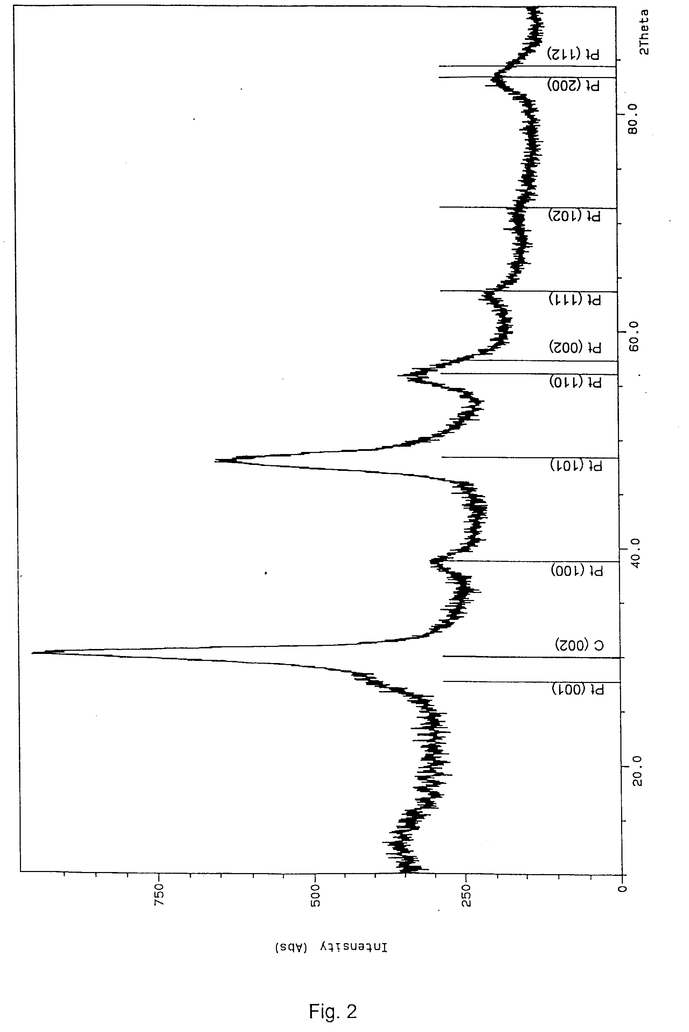

Die Figuren 1 und 2 zeigen Röntgenbeugungsdiagramme des gemäß Beispiel 2 hergestellten Katalysators.
- Figur 1:: Röntgenbeugungsdiagramm nach einer zusätzlichen Sinterbehandlung des fertigen Katalysators bei 900° C für die Dauer von 2 Stunden.
- Figur 2:: Röntgenbeugungsdiagramm des fertigen Katalysators.

### Vergleichsbeispiel 1

Es wurde ein Pt/Co/Cr-Katalysator mit 10 Gew.-% Platin analog zu Beispiel 8 aus der GB-OS 2 242 203 hergestellt.

Als Platinvorstufe diente Hexachloroplatinsäure. Der Ruß wurde zunächst in VE-Wasser suspendiert und die Suspension durch Zugabe von Natriumhydrogencarbonat basisch gemacht. Nach 30-minütigem Kochen der basischen Suspension wurde Platin in Form von Hexachloroplatinsäure innerhalb von 5 Minuten zugefügt und für weitere 5 Minuten gekocht. Anschließend wurden der Suspension Cobalt und Chrom in Form wäßriger Lösungen von Cobaltchlorid und Chromchlorid über einen Zeitraum von 10 Minuten zugefügt. Die Mischung wurde für die Dauer von weiteren 2 Stunden gekocht. Danach wurde diese Katalysatorvorstufe abfiltriert, getrocknet und bei 200° C für die Dauer von einer Stunde in einem Formiergasstrom (5 Vol.% H₂, 95 Vol.% N₂) reduziert. Sofort nach der Reduktion wurde der Katalysator zur Formung der geordneten Legierung wie schon beschrieben calciniert.

Das Kochen der Katalysatorsuspension bei 100° C während der Abscheidung der Legierungskomponenten erfolgte zur Vermeidung von Flüssigkeitsverlusten unter Rückfluß. Die gesamte Dauer des Abscheideverfahrens betrug vom Beginn des Kochens der basischen Rußsuspension bis zum Abfiltrieren der Katalysatorvorstufe 170 Minuten.

Der fertige Katalysator enthielt 10 Gew.-% Platin, 1,82 Gew.-% Cobalt und 1,07 Gew.-% Chrom entsprechend einem Atomverhältnis Pt : Co : Cr = 48 : 33 : 19. Bei diesen Angaben handelt es sich ebenso wie bei allen folgenden Beispielen um durch Analysen am fertigen Katalysator ermittelte Werte.

### Vergleichsbeispiel 2

Es wurde ein zweiter Pt/Co/Cr-Katalysator mit 10 Gew.-% Platin entsprechend Beispiel 1 aus der US-PS 4,447,506 hergestellt. Dabei wurde gemäß der US-PS 4,447,506 von einem kommerziell erhältlichen, hochoberflächigen 10 Gew.-% Platin enthaltenden Katalysator auf graphitiertem Ruß Vulcan XC-72 ausgegangen (Katalysator F902X/D 10 % Pt von Degussa). Dieser Katalysator wurde sorgfältig in Wasser suspendiert. Der pH-Wert der Suspension wurde mit verdünntem Ammoniumhydroxid auf einen Wert von 8 eingestellt. Als nächstes wurde der Suspension das Legierungselement Chrom in Form einer wäßrigen Lösung von Ammoniumchromat hinzugefügt. Der pH-Wert der Mischung wurde anschließend durch Zugabe von verdünnter Salzsäure auf den Wert 5,5 eingestellt, um die Abscheidung des Chroms auf dem Platin des Platinkatalysators zu erleichtern. Nach 15-minütigem Rühren der Suspension erfolgte die Abscheidung von Cobalt auf den Katalysator durch Zugabe einer wäßrigen Lösung von Cobaltnitrat. Auch hierbei wurde der pH-Wert der Mischung durch Zugabe von Salzsäure auf einen Wert von 5,5 konstant gehalten.

Nach dem Abfiltrieren der Katalysatorvorstufe wurde sie ohne vorhergehende Reduktion calciniert. Alle Schritte während der Abscheidung von Cobalt und Chrom wurden bei Raumtemperatur vorgenommen. Für das Abscheiden dieser Komponenten wurden 60 Minuten benötigt. In dieser Zeit ist die Zeit für die Präparation des kommerziellen Platin-Katalysators nicht enthalten.

Der fertige Katalysator enthielt 9,7 % Platin, 1,75 % Cobalt und 1,26 % Chrom entsprechend einem Atomverhältnis Pt : CO :Cr = 48 : 29 : 23.

### Vergleichsbeispiel 3

Es wurde ein dritter Pt/Co/Cr-Katalysator mit einer Platinbeladung von 10 Gew.-% nach Beispiel 1 aus der WO 91/19566 hergestellt.

Hierzu wurde wieder zunächst eine Suspension von graphitiertem Ruß Vulcan XC-72 in VE-Wasser hergestellt. Die Suspension wurde auf 90° C erwärmt und anschließend eine wäßrige Lösung von Hexachloroplatinsäure über eine Zeit von 5 Minuten hinzugefügt. Der pH-Wert dieser Mischung wurde durch Zugabe der im Beispiel 1 von WO 91/19566 angegebenen Menge Natronlauge auf einen Wert von ca. 10 eingestellt und die gesamte Mischung noch für weitere 75 Minuten auf einer Temperatur von 90° C gehalten. Nach Abkühlung auf 75° C, was etwa 10 Minuten in Anspruch nahm, wurden der Suspension die Legierungselemente Cobalt und Chrom in Form einer wäßrigen Lösung von Cobaltnitrat und Chromnitrat während 5 Minuten zugefügt. Der pH-Wert der Suspension wurde mit Natronlauge auf einen Wert im Bereich zwischen 6,7 und 7,1 eingestellt und für weitere 15 Minuten gerührt. Die so erhaltene Katalysator-Vorstufe wurde abfiltriert, mit einer 2-%igen Ammoniumhydroxid-Lösung gewaschen und getrocknet und ohne vorhergehende Reduktion calciniert. Für die Abscheidung der Legierungskomponenten auf dem Rußträger wurden in diesem Vergleichsbeispiel insgesamt 110 Minuten benötigt. Der fertige Katalysator enthielt 10,4 Gew.-% Platin, 1,73 Gew.-% Cobalt und 1,26 Gew.-% Chrom, entsprechend einem Atomverhältnis Pt : Co : Cr = 50 : 28 : 22.

### Beispiel 1

Es wurden 50 g eines erfindungsgemäßer Pt/Co/Cr-Katalysators mit 10 Gew.-% Platin wie folgt hergestellt:

43,45 g graphitierter Vulcan-Ruß wurden in 1,5 l VE-Wasser suspendiert und die Suspension auf 80° C erwärmt. Die Legierungselemente Platin, Cobalt und Chrom wurden dieser Suspension gemeinsam als Lösung von 5 g Platin als Platin(IV)nitrat, 0,9 g Cobalt als Cobalt(II)nitrat und 0,65 g Chrom als Chrom(III)nitrat in einer Portion in weniger als 5 Minuten zugegeben. Nach 15-minütigem Rühren der Suspension bei einer Temperatur von 75° C wurde der pH-Wert der Suspension mit Natronlauge auf den Wert 9 eingestellt und für die Dauer von weiteren 30 Minuten auf einer Temperatur von 75° C gehalten. Zur Reduktion der auf dem Ruß abgeschiedenen Metallverbindungen wurden der Suspension 6,8 ml Formaldehyd (37 %ig) zugegeben und die Suspension für weitere 15 Minuten gerührt. Danach wurde die Katalysator-Vorstufe abfiltriert, mit Wasser gewaschen und bei 80° C im Vakuum getrocknet und anschließend calciniert.

Für die gesamte Abscheidung der Legierungskomponenten inklusive der naßchemischen Reduktion wurden weniger als 65 Minuten benötigt.

Der fertige Katalysator enthielt 9,8 Gew.-% Platin, 1,6 Gew.-% Cobalt und 1,2 Gew.-% Chrom, entsprechend einem Atomverhältnis Pt : Co : Cr = 50 : 27 : 23.

### Beispiel 2

Beispiel 2 wurde mit etwas geänderten Mengen von Cobaltnitrat und Chromnitrat wiederholt. Dabei wurden auf 43,56 g Ruß 5 g Platin, 0,91 g Cobalt und 0,53 g Chrom abgeschieden.

Der fertige Katalysator enthielt Platin, Cobalt und Chrom im Atomverhältnis 50 : 30 : 20.

### Beispiel 3

Analog zu Beispiel 2 wurde ein Pt/Co/Cr-Katalysator mit 20 Gew.-% Platin durch Verdoppelung der Mengen der Platin-, Cobalt- und Chromsalze hergestellt.

### Vergleichsbeispiel 4

Es wurde ein weiterer Vergleichskatalysator analog zu Vergleichsbeispiel 1 hergestellt, jedoch wurde anstatt von Hexachloroplatinsäure Platin(IV)nitrat eingesetzt. Unter den Verfahrensbedingungen von Vergleichsbeispiel 1 fand nur eine unvollständige Abscheidung der Platinverbindung auf dem Trägermaterial statt. Der so hergestellte Katalysator wies gegenüber dem Vergleichskatalysator von Vergleichsbeispiel 1 einen Fehlbetrag an Platin von 12 % auf.

### Vergleichsbeispiel 5

Es wurde ein weiterer Vergleichskatalysator analog zu Vergleichsbeispiel 2 hergestellt. Hexachloroplatinsäure aus Vergleichsbeispiel 2 wurde dabei durch Platin(IV)nitrat ersetzt.

Der fertige Katalysator enthielt 9,7 Gew.-% Platin, 1,75 Gew.-% Cobalt und 1,26 Gew.-% Chrom entsprechend einem Atomverhältnis von Pt : C : Cr = 48 : 29 : 23.

### Vergleichsbeispiel 6

Ein weiterer Vergleichskatalysator wurde analog zu Vergleichsbeispiel 3 hergestellt. Auch hier wurde die Hexachloroplatinsäure durch Platin(IV)nitrat ersetzt.

Der fertige Katalysator enthielt 10,4 Gew.-% Platin, 1,73 Gew.-% Cobalt und 1,26 Gew.-% Chrom entsprechend einem Atomverhältnis Pt : Co : Cr = 50 : 28 : 22.

### Vergleichsbeispiel 7

Es wurde ein weiterer Vergleichskatalysator analog zu Vergleichsbeispiel 6 hergestellt, jedoch wurde die zwischenzeitlich vorliegende Pt/C-Stufe mit 6,8 ml Formaldehyd-Lösung (37 %ig) reduziert.

Der fertige Katalysator enthielt 10 Gew.-% Platin, 1,77 Gew.-% Cobalt und 1,03 Gew.-% Chrom entsprechend einem Atomverhältnis Pt : Co : Cr = 50 : 30 : 20.

### Charakterisierung der Katalysatoren

Zur Bestimmung ihrer elektrochemischen Eigenschaften wurden die Katalysatoren der vorstehenden Beispiele zu Gasdiffusionselektroden mit einem PTFE-Gehalt (PTFE: Polytetrafluorethylen) von 30 Gew.-% verarbeitet. Hierzu wurden die Katalysatoren in bekannter Weise in einer Suspension von PTFE dispergiert. Mit der resultierenden Suspension wurde ein mit PTFE hydrophobiertes Graphitpapier beschichtet und die Beschichtung abschließend bei 340° C gesintert. Die Beschichtung wurde so eingestellt, daß der Platingehalt der fertigen Elektrode etwa 0,5 mg Pt/cm² betrug.

Ein jeweils 2 Quadratzentimeter großes Stück der so hergestellten Elektroden wurde in einer elektrochemischen Halbzelle gegen eine dynamische Wasserstoffelektrode (DHE: Dynamic Hydrogen Electrode) in 103 %iger Phosphorsäure bei einer Betriebstemperatur von 190° C bezüglich ihrer Fähigkeit, Sauerstoff zu reduzieren, untersucht.

Als Kenndaten wurden hierfür die sogenannte Sauerstoff-Massenaktivität und das Potential bei einem Stromfluß durch die Brennstoffzelle von 200 mA/mg Pt gemessen. Die Sauerstoff-Massenaktivität ist definiert als der sich bei einem Potential von 0,9 V einstellende Strom, bezogen auf die Menge Platin der Elektrode, gemessen in mA/mg Pt. Bei der Bestimmung beider Kenndaten diente Sauerstoff als Reaktant.

Bei den angegebenen Potentialen handelt es sich um Werte, die zur Elimination des Innenwiderstandes der elektrochemischen Zelle korrigiert wurden.

Beide Kenndaten wurden jeweils erst nach einer 3-stündigen Anfahrphase gemessen. Während der Anfahrphase befand sich die elektrochemische Halbzelle auf Betriebstemperatur von 190° C, jedoch blieb der Stromkreis während dieser Phase geöffnet, so daß kein Strom fließen konnte. Zur Bestimmung der Alterungsstabilität wurde das Potential bei 200 mA/mg Pt nach einer zusätzlichen Alterung von 19 Stunden bestimmt. Die Betriebsbedingungen während der Alterung entsprachen den Bedingungen während der Anfahrphase. Die Ergebnisse dieser Messungen sind in der folgenden Tabelle 1 aufgelistet. Bei den Werten für den frischen Zustand handelt es sich um die Meßwerte nach der Anfahrphase.

Der Vergleichskatalysator V4 wurde wegen zu geringen Platingehaltes nicht getestet.

Die erfindungsgemäßen Katalysatoren der Beispiele B1 bis B3 zeichnen sich durch eine hohe Sauerstoff-Massenaktivität und ein hohes Potential bei einem Stromfluß von 200 mA/mg Pt sowohl im Frischzustand als auch nach Alterung aus.

Zur weiteren Charakterisierung der Katalysatoren wurden die Teilchengröße der Legierungspartikel bzw Kristallite und ihre kristalline Struktur durch Röntgenbeugung mit Co-K-Strahlung bestimmt. Für elektrochemische Anwendungen sollte der Katalysator bei möglichst geringen Kristallitdurchmessern, also entsprechend großer elektrochemischer Oberfläche, eine weitgehend geordnete Struktur aufweisen.

Die Figuren 1 und 2 zeigen Röntgenbeugungsdiagramme des erfindungsgemäßen Katalysators von Beispiel B2. Um die Kristallstruktur der Legierungspartikel eindeutig aufklären zu können, wurde der Katalysator vor Aufnahme des Diagramms von Figur 1 einer zusätzlichen Sinterbehandlung bei 900° C für die Dauer von 2 Stunden unterworfen. Durch diese Sinterbehandlung wachsen die hoch dispergierten Legierungspartikel zu größeren Kristalliten zusammen, die schärfere Beugungsreflexe liefern.

Die Beugungsreflexe von Figur 1 können der Ebene C(002) (Millersche Indizes) des graphitierten Kohlenstoffträgers und den verschiedenen Ebenen eines tetragonalen Raumgitters der PtCoCr-Legierung zugeordnet werden. Diese Reflexe sind mit Pt(001) usw. gekennzeichnet. Die Gitterkonstanten des tetragonalen Raumgitters sind a₀ = b₀ = 2,695 Å und c₀ = 3,736 Å.

Das Beugungsdiagramm von Figur 2 wurde am fertigen Katalysator von Beispiel B2 ohne zusätzliche Sinterbehandlung erhalten. Wegen der geringeren Kristallitgröße sind die Beugungsreflexe weniger ausgeprägt und gegenüber den Reflexen von Figur 1 verbreitert, so daß nahe benachbarte Reflexe miteinander verschmolzen sind. Durch Vergleich beider Beugungsdiagramme zeigt sich jedoch, daß auch der fertige Katalysator dieselbe tetragonale Raumgitterstruktur aufweist, wie der zusätzlich gesinterte Katalysator.

Aus der Halbwertsbreite des stärksten Platinreflexes Pt(001) von Figur 2 kann die röntgenographische Kristallitgröße der Legierungspartikel ermittelt werden. Diese Bestimmung wurde für alle Katalysatoren der Vergleichsbeispiele und Beispiele durchgeführt. Die Ergebnisse sind in Tabelle 2 aufgelistet.

Tabelle 2 zeigt, daß die erfindungsgemäßen Katalysatoren der Beispiele B1 bis B3 Kristallitgrößen unterhalb von 60 Å besitzen. Vergleichbar günstige Werte zeigt nur der Vergleichskatalysator von Vergleichsbeispiel V1. Dieser Katalysator hat jedoch wahrscheinlich aufgrund der als Vorstufe für Platin verwendeten Hexachloroplatinsäure schlechtere elektrochemische Eigenschaften.

Die übrigen Vergleichskatalysatoren weisen größere Kristallitdurchmesser auf, was sich in einer entsprechend verminderten Sauerstoff-Massenaktivität bzw. geringeren Potentialen bei einer Stromdichte von 200 mA/mg Pt äußert.

**Tabelle 1**

| Beispiel | Katalysator | | O₂-Massenaktivität bei 0,9 V in [mA/mg Pt] | Potential in mV bei 200 mA/mg Pt | |
|---|---|---|---|---|---|
| | Gew.% Pt | Pt:Co:Cr | Frischzustand | frisch | gealtert |
| V1 | 10 | 48:33:19 | 68 | 851 | 827 |
| V2 | 10 | 48:29:23 | 78 | 858 | 839 |
| V3 | 10 | 50:28:22 | 66 | 852 | 839 |
| B1 | 10 | 50:27:23 | 74 | 858 | 845 |
| B2 | 10 | 50:30:20 | 87 | 867 | 845 |
| B3 | 20 | 50:30:20 | 86 | 863 | 847 |
| V5 | 10 | 48:49:23 | 69 | 852 | 828 |
| V6 | 10 | 50:28:22 | 41 | 855 | 813 |
| V7 | 10 | 50:30:20 | 74 | 848 | 794 |

**Tabelle 2**

| Beispiel | Katalysator | | Kristallitgröße [Å] |
|---|---|---|---|
| | Gew.% Pt | Pt:Co:Cr | |
| V1 | 10 | 48:33:19 | 56 |
| V2 | 10 | 48:29:23 | 72 |
| V3 | 10 | 50:28:22 | 101 |
| B1 | 10 | 50:27:23 | 48 |
| B2 | 10 | 50:30:20 | 57 |
| B3 | 20 | 50:30:20 | 56 |
| V5 | 10 | 48:49:23 | 69 |
| V6 | 10 | 50:28:22 | 165 |
| V7 | 10 | 50:30:20 | 77 |

## Patentansprüche

1. Platinlegierungskatalysator auf einem leitfähigen Kohlenstoffträger enthaltend als katalytisch aktive Komponente eine ternäre Legierung aus den Legierungskomponenten Platin, Cobalt und Chrom, wobei die Legierung in hochdispergierter Form mit röntgenographischen Kristallitgrößen von nicht mehr als 60 Å (6 nm) auf dem Träger vorliegt,
**dadurch gekennzeichnet,**
daß die Legierung eine überwiegend tetragonale Struktur aufweist.

2. Platinlegierungskatalysator nach Anspruch 1,
**dadurch gekennzeichnet,**
daß das Atomverhältnis zwischen Platin und den beiden anderen Legierungskomponenten Cobalt und Chrom zwischen 80 : 20 und 40 : 60, bevorzugt zwischen 60 : 40 und 40 : 60 liegt.

3. Platinlegierungskatalysator nach Anspruch 2,
**dadurch gekennzeichnet,**
daß die Legierungskomponenten Cobalt und Chrom in einem Atomverhältnis von 95 : 5 bis 5 : 95, insbesondere von 60 : 40 bis 40 : 60, zueinander stehen.

4. Platinlegierungskatalysator nach einem der vorstehenden Ansprüche,
**dadurch gekennzeichnet,**
daß Platin in einer Menge von 5 bis 35, bevorzugt 10 bis 20 Gew.-%, relativ zum Gesamtgewicht des Katalysators vorliegt.

5. Verwendung des Katalysators nach einem der vorstehenden Ansprüche für die Herstellung von Brennstoffzellenelektroden.

6. Verfahren zur Herstellung eines Platinlegierungskatalysators auf einem leitfähigen Kohlenstoffträger enthaltend als katalytisch aktive Komponente eine ternäre Legierung aus den Legierungskomponenten Platin, Cobalt und Chrom durch Anfertigen einer wäßrigen Suspension des Kohlenstoffträgers, Mischen dieser Suspension mit einer wäßrigen Lösung von Vorstufen der Legierungskomponenten, Ausfällen der Legierungskomponenten in Form ihrer Hydroxide durch Zugabe einer Base, Reduzieren mit einem Reduktiosmittel, Waschen und Trocknen der so erhaltenen Katalysatorvorstufe und Calcinieren bei Temperaturen oberhalb von 800°C zur Legierungsbildung,
**dadurch gekennzeichnet,**
daß es sich bei den Vorstufen der Legierungskomponenten um Nitrate handelt, die gemeinsam auf den Kohlenstoffträger ausgefällt werden, daß die Suspension des Kohlenstoffträgers vor Zugabe der Legierungskomponenten auf 80 bis 90°C erwärmt und nach Zugabe der Legierungskomponenten auf einer konstanten Temperatur zwischen 70 und 80°C gehalten wird und daß zur vollständigen und gleichzeitigen Abscheidung der Legierungskomponenten der pH-Wert der Suspension durch Zugabe von Natronlauge als Base auf 8 bis 9 angehoben wird.

## Claims

1. Platinum alloy catalyst on a conductive carbon support containing as the catalytically active constituent a ternary alloy of the alloying constituents platinum, cobalt and chromium, the alloy being present on the support in highly disperse form with radiographic crystallite sizes of no more than 60 Å (6 nm),
characterised in that
the alloy exhibits a predominantly tetragonal structure.

2. Platinum alloy catalyst according to claim 1,
characterised in that
the atomic ratio between platinum and the other two alloying constituents cobalt and chromium is between 80:20 and 40:60, preferably between 60:40 and 40:60.

3. Platinum alloy catalyst according to claim 2,
characterised in that
the alloying constituents cobalt and chromium are in an atomic ratio of 95:5 to 5:95, particularly of 60:40 to 40:60, to one another.

4. Platinum alloy catalyst according to one of the above claims,
characterised in that
platinum is present in a quantity of 5 to 35, preferably 10 to 20, wt.% relative to the total weight of the catalyst.

5. Use of the catalyst according to one of the above claims for the production of fuel cell electrodes.

6. Process for the production of a platinum alloy catalyst on a conductive carbon support containing as the catalytically active constituent a ternary alloy of the alloying constituents platinum, cobalt and chromium, by preparing an aqueous suspension of the carbon support, mixing this suspension with an aqueous solution of precursors of the alloying constituents, precipitating the alloying constituents in the form of their hydroxides by adding a base, reducing with a reducing agent, washing and drying the catalyst precursor thus obtained and calcining at temperatures of above 800°C to form the alloy,
characterised in that
the precursors of the alloying constituents are nitrates which are precipitated on to the carbon support jointly, the suspension of the carbon support is heated to 80 to 90°C before the alloying constituents are added and is maintained at a constant temperature of between 70 and 80°C after addition of the alloying constituents and the pH of the suspension is increased to 8 to 9 by adding sodium hydroxide solution as the base for the complete and simultaneous separation of the alloying constituents.

## Revendications

1. Catalyseur en alliage de platine sur un support carboné conducteur contenant comme composant catalytiquement actif un alliage ternaire des composants d'alliage platine, cobalt et chrome, l'alliage se présentant sous forme hautement dispersée avec des tailles de cristallites aux rayons X ne dépassant pas 60 Å (6 nm) sur le support,
caractérisé en ce que
l'alliage présente une structure principalement tétragonale.

2. Catalyseur en alliage de platine selon la revendication 1,
caractérisé en ce que
le rapport atomique entre le platine et les deux autres composants de l'alliage que sont le cobalt et le chrome se situe entre 80:20 et 40:60, de préférence entre 60:40 et 40:60.

3. Catalyseur en alliage de platine selon la revendication 2,
caractérisé en ce que
les composants de l'alliage que sont le cobalt et le chrome sont l'un par rapport à l'autre dans un rapport atomique de 95:5 à 5:95, en particulier de 60:40 à 40:60.

4. Catalyseur en alliage de platine selon l'une des revendications précédentes
caractérisé en ce que
le platine se présente en une quantité de 5 à 35, de préférence de 10 à 20 % en poids, relativement au poids total du catalyseur.

5. Utilisation du catalyseur selon l'une des revendications précédentes pour la préparation d'électrodes de piles à combustibles.

6. Procédé de fabrication d'un catalyseur en alliage de platine sur un support carboné conducteur contenant comme composant catalytiquement actif un alliage ternaire constitué des composants d'alliage platine, cobalt et chrome par préparation d'une suspension aqueuse du support carboné, mélange de cette suspension avec une solution aqueuse de précurseurs des composants d'alliage, précipitation des composants d'alliage sous la forme de leurs hydroxydes par addition d'une base, réduction avec un réducteur, lavage et séchage du précurseur de catalyseur ainsi obtenu et calcination à des températures supérieures à 800°C pour la formation de l'alliage,
caractérisé en ce que
les précurseurs des composants d'alliage sont des nitrates qui sont précipités ensemble sur le support carboné, en ce qu'on chauffe la suspension du support carboné entre 80 et 90°C avant l'addition des composants de l'alliage et en ce qu'on la maintient à une température constante comprise entre 70 et 80°C après addition des composants de l'alliage, et en ce que pour déposer de manière complète et simultanée les composants de l'alliage on élève le pH de la suspension à 8 jusqu'à 9 par addition de lessive de soude comme base.
